(19) Europäisches Patentamt
European Patent Office
Office européen des brevets

(11) EP 2 048 818 A1

# (12) EUROPÄISCHE PATENTANMELDUNG

(43) Veröffentlichungstag:
**15.04.2009 Patentblatt 2009/16**

(21) Anmeldenummer: **08014999.0**

(22) Anmeldetag: **25.08.2008**

(51) Int Cl.:
***H04L 12/24*** *(2006.01)* ***H04L 12/28*** *(2006.01)*
***H04L 12/56*** *(2006.01)*

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **08.10.2007 EP 07019648**

(71) Anmelder: **Siemens Aktiengesellschaft**
**80333 München (DE)**

(72) Erfinder:
- **Hollick, Matthias**
  **64289 Darmstadt (DE)**
- **Mogre, Parag Sudhir**
  **64289 Darmstadt (DE)**
- **Schwingenschlögl, Christian, Dr.**
  **85640 Putzbrunn (DE)**
- **Ziller, Andreas**
  **81827 München (DE)**

## (54) Verfahren und Netzknoten zum Ermitteln einer Kenngrösse für die Dienstgüte eines Netzwerkpads

(57) Die Erfindung betrifft ein Verfahren zum Ermitteln einer Kenngröße (Q) für die Dienstgüte eines Ende-zu-Ende Netzwerkpfads (R1) in einem verbindungsorientierten paketvermittelten Multi-Hop-Netzwerk, mit einem Netzwerkmanagement, durch welches zumindest ein Dienstgütemerkmal für jeden Datenlink des Netzwerkpfad in ISO/OSI-Schicht 2 spezifiziert ist, welches die folgenden Schritte umfasst:
a) ein Datenpaket mit wenigstens einer Datenspeicherstruktur zur Speicherung von Dienstgütemerkmalen wird entlang des Netzwerkpfads (R1) übertragen;
b) jeder Netzknoten des Netzwerkpfads ermittelt eine Maßzahl für wenigstens ein, diesen Netzknoten betreffendes, in ISO/OSI-Schicht 2 spezifiziertes Dienstgütemerkmal und speichert diesen Wert in der wenigstens einen Datenspeicherstruktur des Datenpakets;
c) wenigstens ein das Datenpaket empfangender Netzknoten wendet folgende Kenngrößenfunktion zur Berechnung der die Dienstgüte beschreibenden Kenngröße (Q) auf die im Datenpaket gespeicherten Dienstgütemerkmale an:

$$Q = \sum_{i \in M}^{M} q_i \cdot c_i + \sum_{i \in O}^{O} \frac{c_i}{\sum_{j \in N_i}^{N_i} (q_j \cdot c_j + \varepsilon)}$$

wobei in der Kenngrößenfunktion $q_i$ bzw. $q_j$ die im Datenpaket gespeicherten Werte eines i'ten bzw. j'ten Dienstgütemerkmals, $c_i$ bzw. $c_j$ wählbare Gewichtungsparameter für die im Datenpaket gespeicherten Werte der i'ten bzw. j'ten Dienstgütemerkmale, $\varepsilon$ eine wählbare Konstante größer Null und M, $N_i$ für alle i, und O verschiedene disjunkte Sätze von Identifikatoren für die Werte der gespeicherten Dienstgütemerkmale bzw. deren Gewichtungsparameter sind.

FIG 1

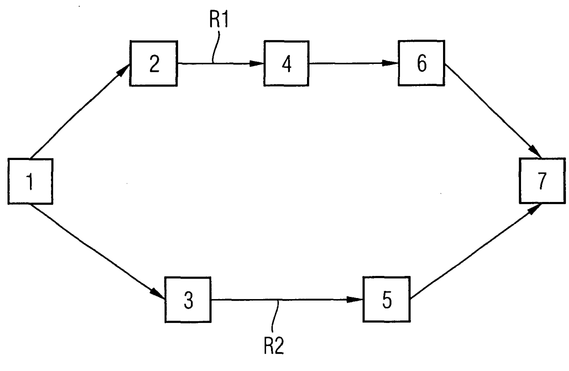


EP 2 048 818 A1

## Beschreibung

Die Erfindung liegt auf dem Gebiet der Netzwerktechnik und betrifft ein Verfahren und einen Netzknoten zum Ermitteln einer Kenngröße für die Dienstgüte eines Netzwerkpfads in einem Netzwerk.

In Nachrichtennetzwerken können Nachrichten zwischen datentechnisch miteinander verbundenen Netzknoten übertragen werden. In verbindungsorientierten paketvermittelten Netzwerken ist zu diesem Zweck ein Netzwerkmanagement eingerichtet, welches für eine Nachrichtenübermittlung einen logischen Ende-zu-Ende Netzwerkpfad ("Route") zwischen zwei Netzknoten des Netzwerks dynamisch aufbaut, der nach erfolgter Nachrichtenübermittlung wieder abgebaut werden kann.

Je nach Art des Netzwerkprotokolls besteht hierbei die Möglichkeit, eine Route so einzurichten, dass bestimmte Dienstgütemerkmale (Qualitätsparameter) für die Route erfüllt sind. Als Dienstgütemerkmale werden beispielsweise eine reservierte minimale Bandbreite (Datenübertragungsrate), maximale Latenz (Verzögerung), tolerierter Jitter (Abweichung der Latenz vom Mittelwert), maximale Paketverlustrate, maximale Bitfehlerrate und ein maximales Signal-/ Rauschverhältnis berücksichtigt. Je nach Anwendung können Dienstgütemerkmale eine unterschiedliche Bedeutung für die Route haben, wobei insbesondere eine reservierte Bandbreite bei Echtzeit-Anwendungen besonders wichtig ist.

Speziell in drahtlosen vermaschten Netzwerken (reaktive Ad-Hoc-Netzwerke), in denen zwei Netzknoten unmittelbar oder über mehrere Zwischenknoten entlang eines Netzwerkpfads datentechnisch miteinander verbunden sein können, ist es zur Verbesserung der Leistungsfähigkeit des Netzwerks wesentlich, dass die Dienstgüte von Netzwerkpfaden ermittelt wird.

Die von verschiedenen Faktoren abhängende Dienstgüte eines Netzwerkpfads kann anhand von Maßzahlen (Metriken) für die berücksichtigten Qualitätsmerkmale ermittelt werden. Herkömmlicher Weise werden zu diesem Zweck spezielle Prüfdatenpakete zur Simulation eines Nutzdatenpakets über den zu prüfenden Netzwerkpfad übertragen. In der Praxis ist die Anwendung solcher Prüfdatenpakete jedoch nur bedingt tauglich, da mehrere Zielkonflikte gelöst werden müssen.

So führen Prüfdatenpakete zu einem zusätzlichen Datenaufkommen neben der Nutzdatenübermittlung, was eine relativ kleine Paketgröße erfordert. Tatsächlich unterscheiden sich die Weiterleitungseigenschaften der relativ kleinen Prüfdatenpakete deutlich von jenen der typischerweise wesentlich größeren Nutzdatenpakete, so dass die hierbei gewonnenen Ergebnisse oftmals nicht den realen Gegebenheiten auf dem Netzwerkpfad entsprechen.

Andererseits erfolgt beispielsweise eine Messung der Latenz eines Netzwerkpfads durch ein Prüfdatenpaket, das vom Startknoten zum Zielknoten übertragen wird und anschließend ohne weitere Verarbeitung vom Zielknoten wieder zum Startknoten gesendet wird, wobei die Laufzeit vom Aussenden bis zum Eintreffen des Prüfdatenpakets vom Startknoten gemessen wird. Die hierbei gemessene Laufzeit wird gewöhnlich mit RTT (RTT = Round Trip Time) abgekürzt. Als Latenz wird eine halbe RTT angenommen.

Wie sich in der Praxis gezeigt hat, sind die Übertragungseigenschaften eines Netzwerkpfads meist asymmetrisch hinsichtlich der beiden Übertragungsrichtungen, wobei sich insbesondere die Latenz hierbei deutlich unterscheidet. Dies hat zur Folge, dass die von einer gemessenen RTT abgeleitete Latenz häufig nicht den realen Gegebenheiten entspricht.

Eine direkte Messung der Latenz über ein lediglich in Vorwärtsrichtung vom Start- zum Zielknoten übertragenes Prüfdatenpaket ist technisch aufwändig, da dies eine Synchronisierung der Uhren im Start- und Zielknoten voraussetzt und das Ergebnis der Messung an den Startknoten übermittelt werden muss.

In drahtlosen Multi-Hop-Netzwerken, in denen eine Datenübertragung im Zeitmultiplexzugriffsverfahren TDMA (TDMA = Time Division Multiple Access) mit einer Bandbreitenreservierung erfolgt, wie dies beispielsweise im Standard IEEE 802.16 (Wi-MAX = Worldwide Interoperability for Microwave Access) spezifiziert ist, tritt ein weiteres Problem auf, dass für die Prüfdatenpakete Bandbreite reserviert wird. Da eine Bandbreitenreservierung über ein 3-stufiges Handshake-Verfahren erfolgt, wird durch die Prüfdatenpakete das Datenaufkommen merklich erhöht. Andererseits werden die Prüfdatenpakete erst mit eine gewissen zeitlichen Verzögerung wieder an den Startknoten übertragen, was erheblichen Einfluss auf die Messung der Latenz hat. Selbst für den Fall, dass bereits eine Route zum Zielknoten eingerichtet ist, löst ein zum Startknoten zurückgesendetes Prüfdatenpaket eine Bandbreitenreservierung in der Rückwärtsrichtung aus.

Hinzu kommt, dass die durch die Bandbreitenreservierung auftretende Verzögerung von Prüfdatenpaketen tatsächlich keine Auswirkung auf die Leistung einer Route hat, wenn schon Bandbreite für die Route reserviert ist, da die Verzögerung nur für das Prüfdatenpaket und die ersten Datenpakete eines Datenstroms beobachtet wird. Eine Messung der Latenz über Prüfdatenpakete liefert somit schlechtere Ergebnisse für die Qualität der Datenübertragung als für eine reale Datenübertragung mit vielen Datenpaketen, bei welcher Bandbreite für einen langen Zeitraum reserviert ist, erwartet werden kann.

Demgegenüber besteht die Aufgabe der vorliegenden Erfindung darin, ein Verfahren zum Ermitteln einer Kenngröße für die Dienstgüte eines Netzwerkpfads in einem Netzwerk zur Verfügung zu stellen, durch welches die aufgezeigten und weitere Nachteile einer herkömmlichen Ermittlung der Dienstgüte mittels Prüfdatenpakete vermieden werden

können.

Diese und weitere Aufgaben werden nach dem Vorschlag der Erfindung durch ein Verfahren und einen Netzknoten zum Ermitteln einer Kenngröße für die Dienstgüte eines Netzwerkpfads in einem Netzwerk mit den Merkmalen der unabhängigen Patentansprüche gelöst. Vorteilhafte Ausgestaltungen der Erfindung sind durch die Merkmale der Unteransprüche angegeben.

Unter "Dienstgüte" eines Netzwerkpfads werden hier und im Weiteren die für einen Netzwerkpfad im Netzwerk geltenden Qualitätsparameter verstanden. Ein Qualitätsparameter (Dienstgütemerkmal) eines Netzwerkpfads ist eine Eigenschaft anhand der die Güte eines Netzwerkpfads beurteilt werden kann. Als "Netzwerkpfad" (Route) zwischen zwei Netzknoten wird ein 2-Tupel aus den jeweiligen Identifikatoren für die beiden Netzknoten oder ein 3-Tupel aus den jeweiligen Identifikatoren für die beiden Netzknoten und einer Serviceklasse des Netzwerkpfads verstanden. Mit "Aggregation" ist die Anwendung einer Aggregationsfunktion gemeint, die Maßzahlen eines selben Qualitätsmerkmals für wenigstens zwei Netzknoten miteinander kombiniert.

Erfindungsgemäß ist ein Verfahren zum Ermitteln einer Kenngröße für die Dienstgüte eines Ende-zu-Ende Netzwerkpfads in einem vermaschten verbindungsorientierten paketvermittelten Multi-Hop-Netzwerk (reaktives Ad-Hoc-Netzwerk) mit datentechnisch verbundenen Netzknoten gezeigt. Bei dem Netzwerkpfad handelt es sich um eine Multi-Hop-Verbindung von Netzknoten, wobei der Netzwerkpfad mindestens drei Netzknoten über zwei Punkt-zu-Punkt Datenlinks miteinander verbindet. Im Netzwerk verbindet jeder Datenlink zwei nächste Nachbarknoten datentechnisch miteinander.

Im Netzwerk ist für den Aufbau von Netzwerkpfaden und eine Übertragung von Datenpaketen entlang der eingerichteten Netzwerkpfade ein Netzwerkmanagement zentral in einer Netzwerksteuereinrichtung oder dezentral in den Netzknoten implementiert.

Das Netzwerkmanagement ist so ausgebildet, dass es für jeden Datenlink eines im Netzwerk eingerichteten Netzwerkpfads jeweils separat für diesen Datenlink zumindest ein Dienstgütemerkmal für die ISO/OSI-Schicht 2 gemäß dem ISO/OSI-Referenzmodell, welche auch als Sicherungsschicht (Data Link) bezeichnet wird, spezifiziert bzw. berücksichtigt. Zudem kann das Netzwerkmanagement auch so ausgebildet sein, dass es für weitere ISO/OSI-Schichten, beispielsweise ISO/OSI-Schicht 1, wenigstens ein Dienstgütemerkmal spezifiziert bzw. berücksichtigt. Für einen eingerichteten Netzwerkpfad sind durch das Netzwerkmanagement keine Dienstgütemerkmale spezifiziert.

Beispielsweise ist im Netzwerk zu diesem Zweck ein Netzwerkmanagement implementiert, das auf TDMA mit Bandbreitenreservierung, insbesondere IEEE 802.16, basiert. In letztgenannten Fall sind für die Medienzugriffskontrollschicht, welche auch als MAC-Schicht (MAC = Media Access Control) bezeichnet wird und eine Unterschicht der ISO/OSI-Schicht 2 bildet, insbesondere die Dienstgütemerkmale "Anzahl der für eine Datenübertragung verfügbaren Zeitschlitze", "Anzahl der für eine Datenübertragung reservierten Zeitschlitze" und "Puffergröße (Queue-Länge)" für einen Ausgangspuffer (Ausgangsqueue) jeweils für die Datenlinks eines Netzwerkpfads spezifiziert.

Das erfindungsgemäße Verfahren hat einen 2-stufigen oder optional 3-stufigen Aufbau. In einer ersten Stufe werden die für eine Berechnung der die Dienstgüte eines Netzwerkpfads beschreibenden Kenngröße erforderlichen Informationen (Maßzahlen für Dienstgütemerkmale) mittels eines über den zu prüfenden Netzwerkpfad übertragenen Datenpakets von den Netzknoten des Netzwerkpfads gesammelt. In einer optionalen zweiten Stufe werden die gesammelten Informationen durch Anwenden einer Aggregationsfunktion auf jeweils gleiche Dienstgütemerkmale netzknotenweise aggregiert. In einer zweiten bzw. dritten Stufe wird aus den aggregierten oder nicht-aggregierten Informationen die die Dienstgüte des Netzwerkpfads beschreibende Kenngröße berechnet.

Für die erste Stufe des erfindungsgemäßen Verfahrens wird zunächst ein Datenpaket entlang eines eingerichteten oder einzurichtenden Netzwerkpfads vom Start- zum Zielknoten übertragen. Bei dem Datenpaket kann es sich um ein vom Startknoten des Netzwerkpfads für den ausschließlichen Zweck der Ermittlung der die Dienstgüte des Netzwerkpfads beschreibenden Kenngröße generiertes (Prüf-)Datenpaket handeln, das über einen bereits zuvor eingerichteten Netzwerkpfad vom Start- zum Zielknoten übertragen wird. Alternativ kann es sich hierbei um ein (Nutz-) Datenpaket mit Nutzdaten für eine Nachrichtenübermittlung handeln, das über einen bereits zuvor eingerichteten Netzwerkpfad vom Start- zum Zielknoten übertragen wird. Weiter alternativ kann es sich auch um ein Datenpaket handeln, das als Anfragenachricht zum Aufbau eines Netzwerkpfads vom Start- zum Zielknoten dient und gemäß eines vorgebbaren Algorithmus vom Startknoten zum Zielknoten weitergeleitet wird.

Wesentlich hierbei ist, dass das über den Netzwerkpfad übertragene Datenpaket, ungeachtet dessen, ob es alleinig dem Zweck einer Ermittlung der die Dienstgüte des Netzwerkpfads beschreibenden Kenngröße dient oder nicht, mit wenigstens einer Datenspeicherstruktur zur Speicherung von Maßzahlen für Dienstgütemerkmale versehen ist.

Jeder das Datenpaket sendende und/oder empfangende Netzknoten des Netzwerkpfads ermittelt eine in betreffende Maßzahl (Metrik) für wenigstens ein Dienstgütemerkmal aus ISO/OSI-Schicht 2. Dies kann eine Maßzahl für den Datenlink des nächsten Hop des Datenpakets im Netzwerkpfad oder alternativ für den Datenlink des vorherigen Hops, d. h. jenes Datenlinks über das das Datenpaket vom Netzknoten empfangen wurde, sein. Wesentlich hierbei ist lediglich, dass eine der beiden Alternativen im erfindungsgemäßen Verfahren konsequent beibehalten wird. Zu diesem Zweck existieren Schnittstellen (Interfaces) zwischen den ISO/OSI-Schichten, durch die Informationen über die Schichten

hinweg (cross layer information) durch entsprechende Mitteilungsdatenpakete ausgetauscht werden können.

Für den Fall, dass das im Netzwerk implementierte Netzwerkmanagement auf IEEE 802.16 basiert, wird eine Maßzahl für wenigstens ein Dienstgütemerkmal ermittelt, das aus oben genannten für die MAC-Schicht spezifizierten Dienstgütemerkmalen gewählt ist.

Die durch Erfassung oder Berechnung ermittelte Maßzahl für das wenigstens eine Dienstgütemerkmal wird in der wenigstens einen Datenspeicherstruktur des Datenpakets in aggregierter Form oder in nicht-aggregierter Form abgelegt bzw. gespeichert. Falls die Maßzahlen für die Dienstgütemerkmale in einer mehrere Netzknoten aggregierenden Form im Datenpaket gespeichert werden, genügt es, wenn das Datenpaket lediglich eine einzige Datenspeicherstruktur zur Speicherung von Dienstgütemerkmalen aufweist. Eine Aggregation von Dienstgütemerkmalen (zweite Stufe des erfindungsgemäßen Verfahrens) erfolgt durch Anwenden einer Aggregationsfunktion auf die Maßzahlen eines jeweils gleichen Dienstgütemerkmals verschiedener Netzknoten, wodurch ein Aggregationswert gewonnen wird, der in der wenigstens einen Datenspeicherstruktur des Datenpakets gespeichert wird. Hierbei kann der von einem Netzknoten ermittelte Aggregationswert jeweils in der Datenspeicherstruktur gespeichert werden, wobei ein bereits gespeicherter Aggregationswert überschrieben (ersetzt) wird. Für eine Berechnung eines neuen Aggregationswerts genügt es, wenn in einem Netzknoten die Aggregationsfunktion auf einen gespeicherten Aggregationswert und eine diesen Netzknoten betreffende Maßzahl für dasselbe Dienstgütemerkmal angewendet wird.

In der zweiten bzw. dritten Stufe des erfindungsgemäßen Verfahren wendet wenigstens ein das Datenpaket empfangender Netzknoten (beispielsweise der Zielknoten eines Netzwerkpfads) folgende Kenngrößenfunktion (Q) zur Berechnung der die Dienstgüte beschreibenden Kenngröße auf die im Datenpaket gespeicherten aggregierten oder nicht-aggregierten Maßzahlen für die Dienstgütemerkmale an:

$$Q = \sum_{i \in M}^{M} q_i \cdot c_i + \sum_{i \in O}^{O} \frac{c_i}{\sum_{j \in N_i}^{N_i} (q_j \cdot c_j + \varepsilon)}$$

wobei in der Kenngrößenfunktion die Funktionsargumente $q_i$ bzw. $q_j$ im Datenpaket gespeicherte Maßzahlen für ein i'tes bzw. j'tes Dienstgütemerkmal, $c_i$ bzw. $c_j$ wählbare Gewichtungsparameter für das i'te bzw. j'te Dienstgütemerkmal, $\varepsilon$ eine wählbare Konstante größer Null und M, $N_i$ für alle i, und O verschiedene disjunkte Sätze von Identifikatoren für die Werte der gespeicherten Dienstgütemerkmale bzw. deren Gewichtungsparameter sind. Über die disjunkten Sätze von Identifikatoren können die Dienstgütemerkmale gruppiert werden. Hierbei wird durch M eine Indexmenge für all jene Qualitätsmerkmale angegeben, bei denen ein größerer Betrag der Maßzahl zu einem schlechteren Qualitätsmerkmal führt, wie beispielsweise bei der Puffergröße. Durch $N_i$ wird eine Indexmenge für all jene Qualitätsmerkmale angegeben, bei denen ein größerer Betrag der Maßzahl zu einem besseren Qualitätsmerkmal führt, wie beispielsweise bei der Bandbreite. Die Maßzahlen der letztgenannten Qualitätsmerkmale werden reziprok addiert.
Durch O wird eine Indexmenge für Elemente aus $N_i$ angegeben.

Das erfindungsgemäße Verfahren ermöglicht in vorteilhafter Weise eine Bewertung der Dienstgüte eines Netzwerkpfads im Netzwerk mittels einer Kenngröße für die Dienstgüte, die auf Qualitätsparametern basiert, die durch das Netzwerkmanagement jeweils separat für die Datenlinks des Netzwerkpfads innerhalb ISO/OSI-Schicht 2 und gegebenenfalls weiterer Schichten spezifiziert bzw. berücksichtigt sind.

Eine Bestimmung der Dienstgüte ist hierbei nicht auf die beschränkte Aussagekraft von Prüfdatenpaketen, beispielsweise über eine Messung von RTT, angewiesen. Vielmehr betreffen die ermittelten Qualitätsparameter unmittelbar die Qualität eines Netzwerkpfads. Über die ermittelte Kenngröße für die Dienstgüte eines Netzwerkpfads können verschiedene Netzwerkpfade in einfacher Weise miteinander verglichen werden. Bei der Erfassung der Informationen für die Ermittlung der die Dienstgüte eines Netzwerkpfads beschreibenden Kenngröße kann auf bereits existierende Datenströme zurückgegriffen werden, so dass kein wesentliches zusätzliches Datenaufkommen notwendig ist.

Insbesondere wird für Netzwerkwerke mit einem auf TDMA mit Bandbreitenreservierung basierenden Netzwerkmanagement, wie IEEE 802.16, durch das erfindungsgemäße Verfahren erstmals eine praktikable Möglichkeit zur Bestimmung der Dienstgüte geschaffen, da es in diesem Fall beispielsweise nicht sinnvoll ist, die erwartete Latenz durch Prüfdatenpakete (Ping-Datenpakete) über RTT zu berechnen. Eine Bestimmung der Dienstgüte durch die Ermittlung von Maßzahlen quer über Schichten des ISO/OSI-Referenzmodells hinweg, ermöglicht eine zuverlässige Bestimmung der Routenqualität, die eine bessere Netzwerkleistung bezüglich Durchsatz, Latenz und Verlässlichkeit ermöglicht.

Erfindungsgemäß ist von Vorteil, wenn jeder das die Informationen sammelnde Datenpaket sendende und/oder empfangende Netzknoten für den Fall, dass wenigstens ein Dienstgütemerkmal innerhalb der ISO/OSI-Schicht 1 für den Netzknoten im Netzwerkpfad spezifiziert ist, eine Maßzahl für wenigstens ein Dienstgütemerkmal aus ISO/OSI-Schicht 1 des Netzknotens (für den nächsten Hop (oder alternativ den vorigen Hop im Netzwerkpfad) ermittelt und diesen

Wert in der wenigstens einen Datenspeicherstruktur des Datenpakets speichert. Bei diesem Dienstgütemerkmal handelt es sich insbesondere um ein für die Datenübertragung über einen Datenlink spezifiziertes Signal/Rausch-Verhältnis. Hierdurch kann die Aussagekraft der Kenngröße für die Dienstgüte des Netzwerkpfads weiter verbessert werden.

Bei einer weiteren vorteilhaften Ausgestaltung des erfindungsgemäßen Verfahrens ermittelt jeder das Datenpaket sendende und/oder empfangende Netzknoten einen Wert für die Länge des vom Datenpaket zurückgelegten Netzwerkpfads, insbesondere die Länge des Netzwerkpfads vom Start- zum Zielknoten, und speichert diesen Wert in der wenigstens einen Datenspeicherstruktur des Datenpakets. Hierdurch kann die Aussagekraft der Kenngröße für die Dienstgüte des Netzwerkpfads weiter verbessert werden.

Bei einer weiteren vorteilhaften Ausgestaltung des erfindungsgemäßen Verfahrens ermittelt jeder das Datenpaket sendende und/oder empfangende Netzknoten einen Wert für eine Abstandskorrelation des vom Datenpaket zurückgelegten Netzwerkpfads zu einem Referenznetzwerkpfad des Netzwerks und speichert diesen Wert in der wenigstens einen Datenspeicherstruktur des Datenpakets. Die Abstandskorrelation (Korrelationsfaktor) zwischen zwei Routen ist eine Maßzahl, die in Bezug zum Abstand der beiden Netzwerkpfade steht bzw. den Abstand zwischen zwei Netzwerkpfaden beschreibt. Der Abstand zweier Netzwerkpfade ergibt sich aus dem Abstand jedes einzelnen Netzknotens eines Netzwerkpfads zu jedem anderen Netzknoten des anderen Netzwerkpfads. Der Abstand zweier Netzknoten ist die Anzahl der Zwischenknoten auf einem kürzesten Weg zwischen den beiden Netzknoten. Hierdurch kann die Aussagekraft der Kenngröße für die Dienstgüte des Netzwerkpfads weiter verbessert werden.

Die Erfindung erstreckt sich weiterhin auf einen Netzknoten eines verbindungsorientierten paketvermittelten Multi-Hop-Netzwerks, in dem ein Netzwerkmanagement implementiert ist, durch das ein wie oben beschriebenes Verfahren ausgeführt werden kann.

Die Erfindung wird nun anhand eines Ausführungsbeispiels näher erläutert, wobei Bezug auf die beigefügten Figuren genommen wird.

Fig. 1 zeigt eine schematische Darstellung eines drahtlosen reaktiven Multi-Hop-Netzwerks;

Fig. 2 veranschaulicht die 7 Schichten des ISO/OSI-Referenzmodells zur Übertragung von Datenpaketen im Netzwerk von Fig. 1.

In Figur 1 ist ein drahtloses vermaschtes verbindungsorientiertes paketvermitteltes Ad-Hoc Netzwerk (reaktives Multi-Hop-Netzwerk) mit einer Mehrzahl Netzknoten (1-7) gezeigt. Unmittelbar benachbarte Netzknoten sind jeweils über Punkt-zu-Punkt-Datenlinks datentechnisch miteinander verbunden. Die Datenlinks sind als Linien dargestellt und nicht näher bezeichnet.

Im Netzwerk ist ein Netzwerkmanagement in den Netzknoten dezentral implementiert, durch das auf eine Verbindungsanfrage hin zwei zueinander parallele Netzwerkpfade (Routen) zwischen einem Startknoten 1 und einem Zielknoten 7 eingerichtet wurden. Die beiden Netzwerkpfade sind im Netzwerk von Fig. 1 mit verdickten Linien schematisch dargestellt. Ein erster Netzwerkpfad R1 verbindet den Startknoten 1 über drei Zwischenknoten 2, 4, 6 mit dem Zielknoten 7. Ein zweiter Netzwerkpfad R2, welcher als Backup-Pfad für den aktiven Netzwerkpfad R1 dient, verbindet den Startkonten 1 über zwei Zwischenknoten 3, 5 mit dem Zielknoten 7.

Wie in Fig. 2 veranschaulicht ist, sind bei einer Datenübertragung zwischen zwei durch einen Punkt-zu-Punkt Datenlink miteinander verbundenen Netzknoten im Netzwerk mehrere Schichten gemäß dem ISO/OSI-Referenzmodell beteiligt. Dies sind eine Bitübertragungsschicht L1 (Physical Layer), in der die bitweise Übertragung der Daten über das Übertragungsmedium bewerkstelligt wird, eine Sicherungsschicht L2 (Data Link), in der beispielsweise der Zugriff auf das Übertragungsmedium geregelt ist, und welche in zwei Unterschichten (LLC = Logical Link Control und Medienzugriffsschicht MAC = Media Access Control) unterteilt ist, eine Vermittlungsschicht L3 (Network layer) L3, in der das Routing und eine Weiterleitung von Datenpaketen erfolgt, eine Transportschicht L4 (Transport Layer) L4, in der eine Ende-zu-Ende Kommunikation über den Netzwerkpfad gesteuert wird, eine Sitzungsschicht L5 (Session Layer), in der eine Kommunikation zwischen zwei Netzknoten erfolgt, eine Darstellungsschicht L6 (Presentation Layer), in der eine systemunabhängige Darstellung von Daten erfolgt, und eine Anwendungsschicht L7 (Application Layer), in der bestimmten Anwendungen bestimmte Funktionalitäten zur Verfügung gestellt werden.

Innerhalb einer selben Schicht der Netzknoten sind jeweils Protokolle für einen reibungslosen Ablauf der Dienste implementiert, was in Fig. 2 durch die Doppelpfeile zwischen selben Schichten veranschaulicht ist. Zwischen den voneinander verschiedenen Schichten eines selben Netzknotens werden über jeweilige Schnittstellen Daten ausgetauscht, was in Fig. 2 durch die Doppelpfeile zwischen den voneinander verschiedenen Schichten veranschaulicht ist.

Im Netzwerk von Fig. 1 erfolgt eine Übertragung von Datenpaketen auf Basis eines Zeitmultiplexzugriffsverfahrens (TDMA = Time Division Multiple Access) mit Bandbreitenreservierung, wie es im Standard IEEE 802.16 spezifiziert ist. Hierbei sind bestimmte Zeitabschnitte (Zeitschlitze) jeweils gleicher Länge mit einer reservierten Bandbreite für eine Datenübertragung vorgesehen, die bezüglich wiederholt zu übertragender Datenrahmen (Frames) gruppiert werden. IEEE 802.16 spezifiziert hierbei lediglich die beiden untersten Schichten L1 und L2, wobei durch die MAC-Schicht die verfügbaren Zeitschlitze auf die verschiedenen Netzknoten, die jeweils mit einem selben Netzknoten über einen separaten Datenlink verbunden sind, verteilt werden.

Im Rahmen von IEEE 802.16 sind in der MAC-Schicht folgende Dienstgütemerkmale jeweils für einen Datenlink spezifiziert:
Als Kanalstatusinformationen, sind dies:

- die Anzahl verfügbarer Zeitschlitze (Minislots) für eine Übertragung in beiden Übertragungsrichtungen des Datenlinks, wobei in diesen Zeitschlitzen ein Netzknoten Datenpakete ohne Beeinträchtigung durch einen anderen Netzknoten senden und empfangen kann,
- die Anzahl verfügbarer Zeitschlitze (Minislots) für eine Übertragung nur in der Empfangsrichtung des Datenlinks, wobei in diesen Zeitschlitzen ein Netzknoten Datenpakete ohne Beeinträchtigung durch einen anderen Netzknoten nur empfangen kann,
- die Anzahl verfügbarer Zeitschlitze (Minislots) für eine Übertragung nur in der Senderichtung des Datenlinks, wobei in diesen Zeitschlitzen ein Netzknoten Datenpakete ohne Beeinträchtigung durch einen anderen Netzknoten nur senden kann,
- die Anzahl verfügbarer Zeitschlitze (Minislots) für eine Übertragung über den Datenlink, bei der weder in Empfangsrichtung noch in Senderichtung Datenpakete ohne Beeinträchtigung durch einen anderen Netzknoten empfangen bzw. gesendet werden können.

Weiterhin ist dies eine Bandbreiteninformation, das heißt, die Anzahl der Zeitschlitze (Minislots), die für den nächsten Hop im Netzwerkpfad bereits reserviert sind.
Weiterhin ist dies eine Pufferlängeninformation, nämlich die Queue-Länge für den Ausgangspuffer des Datenlinks für den nächsten Hop im Netzwerkpfad
Um die Dienstgüte des im Netzwerk eingerichteten Netzwerkpfads R1 zwischen Startknoten 1 und Zielknoten 7 zu bestimmen, wird eine die Dienstgüte beschreibende Kenngröße in der folgenden Weise ermittelt: Zunächst wird ein Datenpaket vom Startknoten 1 generiert, das mit einer Datenspeicherstruktur zum Speichern von Maßzahlen für Dienstgütemerkmale versehen ist. Das Datenpaket wird entlang des Netzwerkpfads R1 vom Startknoten 1 zum Zielknoten 7 übertragen. Das Datenpaket weist beispielsweise folgendes Format auf:

| Feld | Größe |
|---|---|
| Nachrichtentyp | 4 Bit |
| Quelladresse | 32 Bit |
| Zieladresse | 32 Bit |
| Serviceklasse | 8 Bit |
| Routennummer | 8 Bit |
| Dienstgüteinformationen: | |
| Korrelationsfaktor | 16 Bit |
| Qualifizierte Queue-Länge | 16 Bit |
| Minimale reservierte Bandbreite | 8 Bit |
| Verfügbare Bandbreite | 8 Bit |
| Länge der Route | 8 Bit |

Demnach ist im Datenpaket ein Identifikator für den Nachrichtentyp, ein Identifikator des Startknotens, ein Identifikator des Zielknotens, ein Identifikator der gewünschten Serviceklasse und eine Routennummer zur Identifikation des Netzwerkpfads enthalten.
Zusätzlich sind in einer Datenspeicherstruktur verschiedene Dienstgüteinformationen (bzw. deren jeweilige Maßzahlen) zur Beschreibung von Eigenschaften des von dem Datenpaket zurückgelegten Netzwerkpfads enthalten, worunter insbesondere ein Korrelationsfaktor (Korrelationskenngröße) zählt, der die Abstandskorrelation von Netzwerkpfad I zum Netzwerkpfad II angibt. Weitere Dienstgüteinformationen sind eine qualifizierte Queue-Länge des Ausgangs-Queue für den nächsten Hop, eine minimale Bandbreite, die für eine Übertragung über den nächsten Hop reserviert ist, eine verfügbare Bandbreite des Datenlinks und die Länge des bislang vom Datenpaket zurückgelegten Netzwerkpfads.
Das vom Startknoten 1 generierte Datenpaket wird über die drei Zwischenknoten 2, 4, 6 zum Zielknoten 7 übertragen. Eine Weiterleitung des Datenpakets erfolgt hierbei durch das Netzwerkmanagement innerhalb ISO/OSI-Schicht 3.
Für jeden das Datenpaket sendenden und/oder empfangenden Netzknoten (Netzknoten 1, 2, 4, 6, 7) des Netzwerkpfads gilt:

Der Netzknoten ermittelt die Maßzahlen der Dienstgütemerkmale, die jeweils in der MAC-Schicht für den nächsten Hop des Datenpakets entlang Netzwerkpfad I spezifiziert sind, und speichert die Maßzahlen dieser Dienstgütemerkmale in der Datenspeicherstruktur des Datenpakets. So wird aus den Dienstgütemerkmalen:

- Anzahl der verfügbaren Zeitschlitze (Minislots) für eine Übertragung in beiden Übertragungsrichtungen entlang des nächsten Hops;
- Anzahl der verfügbaren Zeitschlitze (Minislots) für eine Übertragung nur in der Empfangsrichtung für den nächsten Hop;
- Anzahl der verfügbaren Zeitschlitze (Minislots) für eine Übertragung nur in der Senderichtung des nächsten Hops; und
- Anzahl der verfügbaren Zeitschlitze (Minislots), bei denen weder ein unbeeinträchtigter Empfang noch ein unbeeinträchtigtes Senden möglich ist;

eine verfügbare Bandbreite für den nächsten Hop des Datenpakets ermittelt.

Aus der Anzahl reservierter Zeitschlitze für den nächsten Hop des Datenpakets ermittelt der Netzknoten die für den nächsten Hop reservierte Bandbreite.

Aus der Queue-Länge für den Ausgangspuffer berechnet der Netznoten als Maßzahl eine so genannte qualifizierte Queue-Länge für den nächsten Hop entlang des Netzwerkpfads. Als qualifizierte Queue-Länge wird beispielsweise der Quotient aus der Queue-Länge und der gewichteten Summe aus reservierter Bandbreite und verfügbarer Bandbreite berechnet. Alternativ hierzu kann auch folgende Formel zur Berechnung einer qualifizierten Queue-Länge L eingesetzt werden. Mit den Abkürzungen

- A: Queue-Länge des Ausgangspuffers für den nächsten Hop
- B: Anzahl der Minislots für beide Übertragungsrichtungen
- C: Anzahl der Minislots für Senderichtung
- D: Anzahl der Minislots für Empfangsrichtung
- E: Anzahl der für den nächste Hop reservierten Minislots
- F: willkürliche kleine Konstante ergibt sich die qualifizierte Queue-Länge (L) zu:

$L=A/(a \cdot B+b \cdot C+c \cdot D+d \cdot E+F)$.

Zudem berechnet jeder das Datenpaket sendende und/oder empfangende Netzknoten die Routenlänge, welche der Anzahl Hops des zurückgelegten Netzwerkpfads, insbesondere der Anzahl Hops vom Start- zum Zielknoten entspricht.

Darüber hinaus berechnet jeder das Datenpaket sendende und/oder empfangende Netzknoten die Abstandskorrelation zur Referenroute R2, welche den Abstand zwischen den beiden Netzwerkpfaden beschreibt. Der Abstand von zwei Routen ergibt sich aus der Summe der Abstände jedes Knotens der ersten Route zum nächsten Knoten der zweiten Route. In diesem Zusammenhang wird als Abstand zweier Knoten die niedrigste Anzahl von Hops zwischen den beiden Netzknoten angesehen.

Die ermittelten Maßzahlen für die Qualitätsmerkmale werden jeweils in einer die Netzknoten aggregierenden Form in der Datenspeicherstruktur gespeichert. Hierbei werden die Maßzahlen für die Zeitschlitze (Minislots), welche die Bandbreite repräsentieren, durch eine Minimumsfunktion für die Netzknoten aggregiert, welche als Ergebniswert das Minimum der Maßzahlen zurückgibt. Die Maßzahlen für die Queue-Länge werden durch eine Plusfunktion für die Netzknoten aggregiert, welche als Ergebniswert eine summierte Queue-Länge ausgibt. Die Maßzahlen für die Netzwerkpfadlänge werden durch eine Plusfunktion für die Netzknoten aggregiert, welche als Ergebniswert eine Netzwerkpfadlänge für den vom Datenpaket bislang zurückgelegten Netzwerkpfad ausgibt. Die Maßzahlen für die Korrelation werden durch eine Plus-Funktion aggregiert, welche als Ergebniswertwert die Gesamtkorrelation der Route liefert.
Die neu ermittelten aggregierten Maßzahlen werden jeweils in der Datenspeicherstruktur gespeichert, wobei eine bereits gespeicherte (aggregierte) Maßzahl ersetzt wird.

Wenn der Zielknoten 7 das Datenpaket mit den aggregierten Maßzahlen für die Dienstgütemerkmale empfängt, wendet er folgende Formel (I) zur Ermittlung der die Dienstgüte beschreibenden Kenngröße Q auf die gespeicherten Maßzahlen an.

Mit den Abkürzungen

**[0047]** - a: aggregierte Queue-Länge
- b: aggregierte Netzwerkpfadlänge
- c: aggregierte reservierte Bandbreite
- d: aggregierte verfügbare Bandbreite
- e: aggregierte Abstandskorrelation
- ε: willkürliche Zahl größer Null gilt:

$$Q = c_1 \cdot a + c_2 \cdot b + \frac{c_3}{c_4 \cdot c + c_5 \cdot d + \varepsilon} + c_6 \cdot e \qquad \text{(I)}$$

worin die Parameter $c_1$, $c_2$, $c_3$, $c_4$, $c_5$ und $c_6$ wählbare Gewichtungsparameter für die Dienstgütemerkmale bezeichnen.

Für den Fall dass die Abstandskorrelation zur Referenzroute nicht berücksichtigt werden soll, wird alternativ die folgende Formel (II) zur Ermittlung der die Dienstgüte beschreibenden Kenngröße Q auf die gespeicherten Maßzahlen angewendet:

$$Q = c_1 \cdot a + c_2 \cdot b + \frac{c_3}{c_4 \cdot c + c_5 \cdot d + \varepsilon} \qquad \text{(II)}$$

worin die Parameter $c_1$, $c_2$, $c_3$, $c_4$ und $c_5$ wählbare Gewichtungsparameter für die Dienstgütemerkmale bezeichnen.

Unter Bezugnahme auf das Netzwerk von Fig. 1 wird für Route R1 ein Zahlenbeispiel für die Ermittlung der Kenngröße Q unter Verwendung von Formel (I) angegeben:

Tabelle 1: Status der Dienstgütemerkmale (DM) auf Netzknoten

| DM | Netzknoten | | | | | | |
|---|---|---|---|---|---|---|---|
| | 1 | 2 | 3 | 4 | 5 | 6 | 7 |
| Queue-Länge | 1 | 100 | 100 | 100 | 400 | 200 | 0 |
| Reservierte Bandbreite | 200 | 35 | 30 | 35 | 40 | 10 | 50 |
| Freie Bandbreite | 40 | 20 | 30 | 40 | 10 | 5 | 40 |
| Korrelation | 1 | 2 | 3 | 3 | 2 | 5 | 1 |

Tabelle 2: Konstanten

| | |
|---|---|
| $c_1$ | 0,01 |
| $c_2$ | 1 |
| $c_3$ | 7 |
| $c_4$ | 0,1 |
| $c_5$ | 0,2 |
| $c_6$ | 1,5 |

Tabelle 3: Berechnung für Route R1

| Netzknoten | Aggregierte Dienstgütemerkmale bis zum i'ten Hop | | | | |
|---|---|---|---|---|---|
| | Queue- Länge | Reservierte Bandbreite | Freie Bandbreite | Korrelation | Routenlänge |
| 1 (i=0) | 200 | 40 | 20 | 1 | 0 |
| 2 (i=1) | 300 | 35 | 20 | 3 | 1 |
| 4 (i=2) | 400 | 30 | 20 | 6 | 2 |
| 6 (i=3) | 500 | 30 | 20 | 9 | 3 |
| 7 (i=4) | 500 | 30 | 20 | 10 | 4 |
| Q = 25 | | | | | |

Als Ergebnis ergibt sich für Route R1 eine Kenngröße Q = 25.

## Patentansprüche

1. Verfahren zum Ermitteln einer Kenngröße (Q) für die Dienstgüte eines Ende-zu-Ende Netzwerkpfads (R1) in einem verbindungsorientierten paketvermittelten Multi-Hop-Netzwerk, mit einem Netzwerkmanagement, durch welches zumindest ein Dienstgütemerkmal für jeden Datenlink des Netzwerkpfad in ISO/OSI-Schicht 2 spezifiziert ist, welches die folgenden Schritte umfasst:

   a) ein Datenpaket mit wenigstens einer Datenspeicherstruktur zur Speicherung von Dienstgütemerkmalen wird entlang des Netzwerkpfads (R1) übertragen;
   b) jeder Netzknoten (1, 2, 4, 6, 7) des Netzwerkpfads ermittelt eine Maßzahl für wenigstens ein, diesen Netzknoten betreffendes, in ISO/OSI-Schicht 2 spezifiziertes Dienstgütemerkmal und speichert diesen Wert in der wenigstens einen Datenspeicherstruktur des Datenpakets;
   c) wenigstens ein das Datenpaket empfangender Netzknoten (7) wendet folgende Kenngrößenfunktion zur Berechnung der die Dienstgüte beschreibenden Kenngröße (Q) auf die im Datenpaket gespeicherten Dienstgütemerkmale an:

$$Q = \sum_{i \in M} q_i \cdot c_i + \sum_{i \in O} \frac{c_i}{\sum_{j \in N_i}^{N_i} (q_j \cdot c_j + \varepsilon)}$$

   wobei in der Kenngrößenfunktion $q_i$ bzw. $q_j$ die im Datenpaket gespeicherten Werte eines i'ten bzw. j'ten Dienstgütemerkmals, $c_i$ bzw. $c_j$ wählbare Gewichtungsparameter für die im Datenpaket gespeicherten Werte der i'ten bzw. j'ten Dienstgütemerkmal, $\varepsilon$ eine wählbare Konstante größer Null und M, $N_i$ für alle i, und O verschiedene disjunkte Sätze von Identifikatoren für die Werte der gespeicherten Dienstgütemerkmale bzw. deren Gewichtungsparameter sind.

2. Verfahren nach Anspruch 1, bei welchem jeder Netzknoten (1, 2, 4, 6, 7) des Netzwerkpfads eine Maßzahl für wenigstens ein in ISO/OSI-Schicht 2 spezifiziertes Dienstgütemerkmal für den nächsten Hop des Datenpakets im Netzwerkpfad ermittelt.

3. Verfahren nach Anspruch 1, bei welchem jeder Netzknoten (1, 2, 4, 6, 7) des Netzwerkpfads eine Maßzahl für wenigstens ein in ISO/OSI-Schicht 2 spezifiziertes Dienstgütemerkmal für den vorigen Hop des Datenpakets im Netzwerkpfad ermittelt.

4. Verfahren nach einem der Ansprüche 1 bis 3, bei welchem im Netzwerk ein auf Time Division Multiple Access (TDMA) mit Bandbreitenreservierung basierenden Netzwerkmanagement zur Übertragung von Datenpaketen im Netzwerk ausgeführt wird.

5. Verfahren nach Anspruch 5, bei welchem im Netzwerk ein auf dem Standard IEEE 802.16 basierendes Netzwerkmanagement zur Übertragung von Datenpaketen ausgeführt wird.

6. Verfahren nach Anspruch 5, bei welchem jeder Netzknoten (1, 2, 4, 6, 7) des Netzwerkpfads einen Wert für wenigstens ein wählbares Dienstgütemerkmal, das in der Media Access Control (MAC-)Schicht gemäß IEEE 802.16 spezifiziert ist, ermittelt.

7. Verfahren nach Anspruch 6, bei welchem das wenigstens eine Dienstgütemerkmal aus der Gruppe, bestehend aus der Anzahl der für eine Datenübertragung verfügbaren Zeitschlitze, der Anzahl der für eine Datenübertragung reservierten Zeitschlitze und der Queue-Länge eines Ausgangspuffers, gewählt ist.

8. Verfahren nach einem der Ansprüche 1 bis 7, bei welchem zumindest ein Dienstgütemerkmal für jeden Datenlink des Netzwerkpfad in ISO/OSI-Schicht 1 spezifiziert ist, wobei jeder das Datenpaket empfangende Netzknoten eine Maßzahl für wenigstens ein Dienstgütemerkmal, das in ISO/OSI-Schicht 1 für diesen Netzknoten spezifiziert ist,

ermittelt und diesen Wert in der wenigstens einen Datenspeicherstruktur des Datenpakets speichert.

**9.** Verfahren nach Anspruch 8, bei welchem jeder Netzknoten (1, 2, 4, 6, 7) des Netzwerkpfads eine Maßzahl für wenigstens ein in ISO/OSI-Schicht 1 spezifiziertes Dienstgütemerkmal für den nächsten Hop des Datenpakets im Netzwerkpfad ermittelt.

**10.** Verfahren nach Anspruch 8, bei welchem jeder Netzknoten (1, 2, 4, 6, 7) des Netzwerkpfads eine Maßzahl für wenigstens ein in ISO/OSI-Schicht 1 spezifiziertes Dienstgütemerkmal für den vorigen Hop des Datenpakets im Netzwerkpfad ermittelt.

**11.** Verfahren nach einem der Ansprüche 8 bis 10, bei welchem das Dienstgütemerkmal ein Signal/Rausch-Verhältnis umfasst.

**12.** Verfahren nach einem der Ansprüche 1 bis 11, bei welchem jeder Netzknoten (1, 2, 4, 6, 7) des Netzwerkpfads eine Länge des vom Datenpaket zurückgelegten Netzwerkpfads ermittelt und diese Maßzahl in der wenigstens einen Datenspeicherstruktur des Datenpakets speichert.

**13.** Verfahren nach einem der Ansprüche 1 bis 12, bei welchem jeder Netzknoten (1, 2, 4, 6, 7) des Netzwerkpfads eine Abstandskorrelation des vom Datenpaket zurückgelegten Netzwerkpfads zu einem Referenz-Netzwerkpfad des Netzwerks ermittelt und diese Maßzahl in der wenigstens einen Datenspeicherstruktur des Datenpakets speichert.

**14.** Verfahren nach einem der Ansprüche 1 bis 13, bei welchem jeder Netzknoten (1, 2, 4, 6, 7) des Netzwerkpfads eine Aggregationsfunktion zur netzknotenweisen Aggregation jeweils gleicher Dienstgütemerkmale auf Maßzahlen für Dienstgütemerkmale anwendet, wodurch ein Aggregationswert gewonnen wird, der in der wenigstens einen Datenspeicherstruktur des Datenpakets gespeichert wird.

**15.** Verfahren nach einem der Ansprüche 1 bis 14, bei welchem wenigstens ein das Datenpaket empfangender Netzknoten (7) folgende Kenngrößenfunktion zur Berechnung der die Dienstgüte beschreibenden Kenngröße (Q) auf die im Datenpaket gespeicherten Dienstgütemerkmale anwendet:

$$Q = c_1 \cdot a + c_2 \cdot b + \frac{c_3}{c_4 \cdot c + c_5 \cdot d + \varepsilon} + c_6 \cdot e$$

worin die Parameter $c_1$, $c_2$, $c_3$, $c_4$ $c_5$ und $c_6$ wählbare Gewichtungsparameter für die Dienstgütemerkmale bezeichnen und die folgenden Abkürzungen gelten: a: aggregierte Queue-Länge für einen Ausgangspuffer des nächsten Hops; b: aggregierte Netzwerkpfadlänge; c: aggregierte reservierte Bandbreite für den nächsten Hop; d: aggregierte verfügbare Bandbreite für den nächsten Hop; e: aggregierte Abstandskorrelation des vom Datenpaket zurückgelegten Netzwerkpfads; $\varepsilon$: willkürliche Zahl größer Null

**16.** Verfahren nach einem der Ansprüche 1 bis 14, bei welchem wenigstens ein das Datenpaket empfangender Netzknoten (7) folgende Kenngrößenfunktion zur Berechnung der die Dienstgüte beschreibenden Kenngröße (Q) auf die im Datenpaket gespeicherten Dienstgütemerkmale anwendet:

$$Q = c_1 \cdot a + c_2 \cdot b + \frac{c_3}{c_4 \cdot c + c_5 \cdot d + \varepsilon}$$

worin die Parameter $c_1$, $c_2$, $c_3$, $c_4$ und $c_5$ wählbare Gewichtungsparameter für die Dienstgütemerkmale bezeichnen und die folgenden Abkürzungen gelten: a: aggregierte Queue-Länge für einen Ausgangspuffer des nächsten Hops; b: aggregierte Netzwerkpfadlänge; c: aggregierte reservierte Bandbreite für den nächsten Hop; d: aggregierte verfügbare Bandbreite für den nächsten Hop; $\varepsilon$: willkürliche Zahl größer Null

**17.** Verfahren nach einem der Ansprüche 1 bis 16, bei welchem das Datenpaket eine Mehrzahl Datenspeicherstrukturen

zur Speicherung von Dienstgütemerkmalen aufweist, wobei jeder das Datenpaket empfangende Zwischenknoten den ermittelten Wert für das wenigstens eine Dienstgütemerkmal in einer diesem Netzknoten zugeordneten separaten Datenspeicherstruktur speichert.

**18.** Netznoten eines verbindungsorientierten paketvermittelten Multi-Hop-Netzwerks, in dem ein Netzwerkmanagement implementiert ist, durch das ein Verfahren nach einem der Ansprüche 1 bis 17 ausgeführt werden kann.

FIG 1

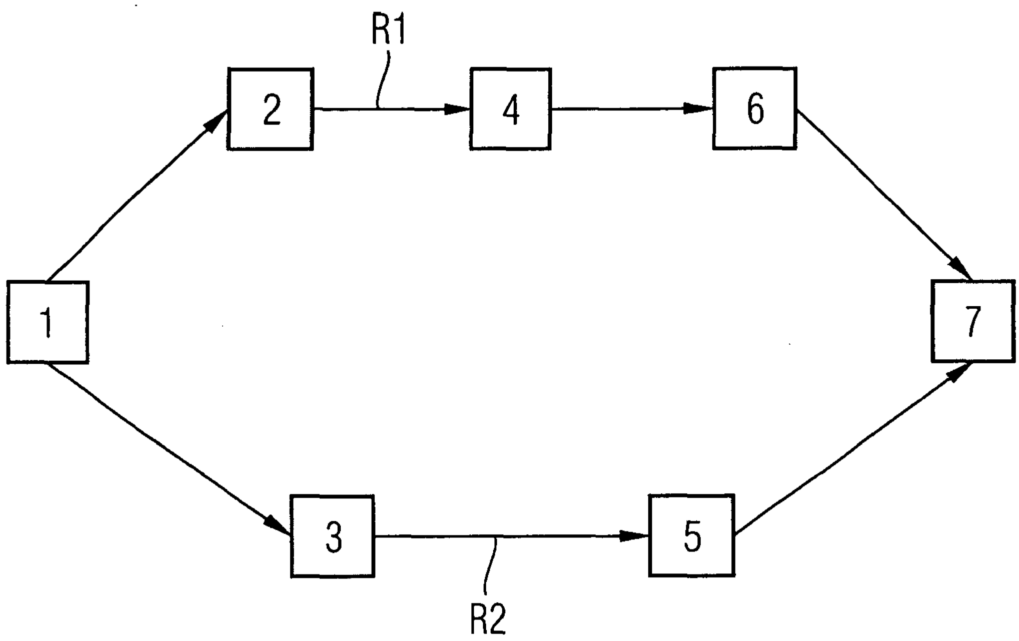

FIG 2

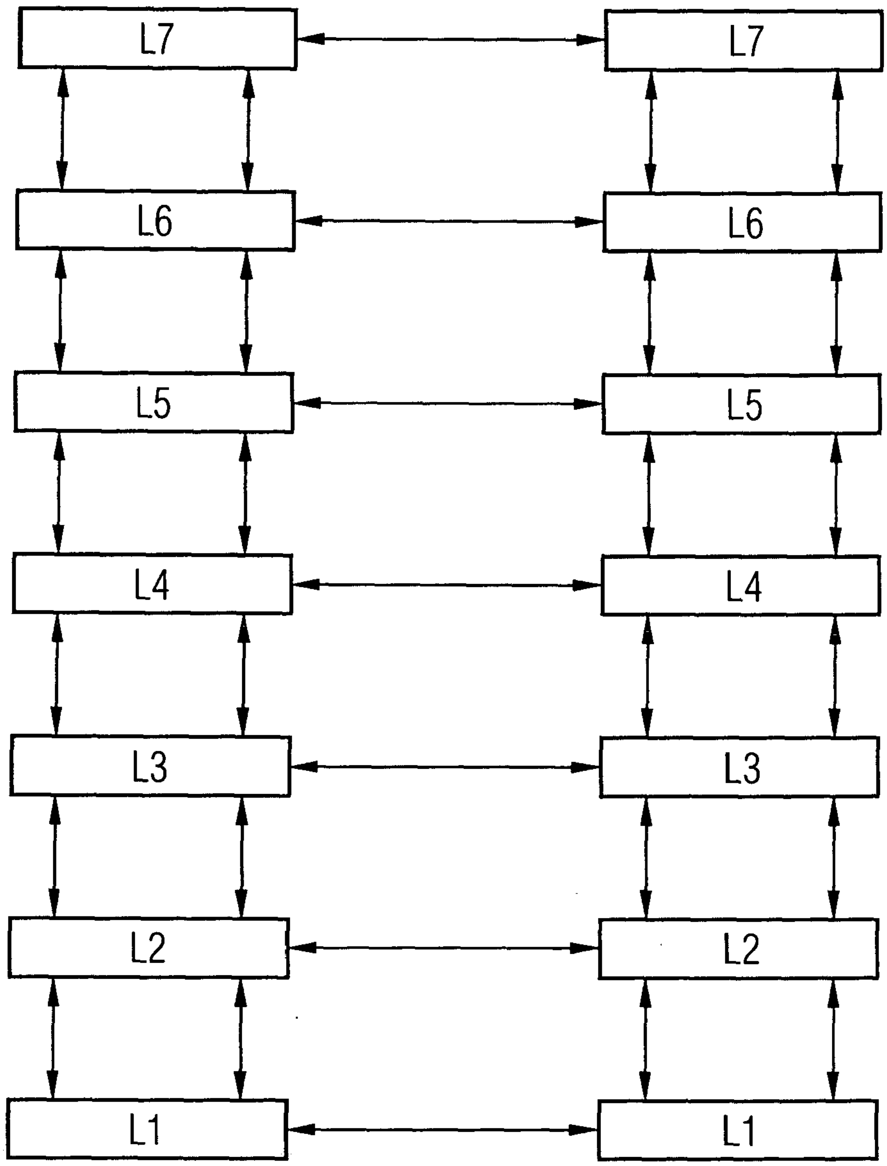

Europäisches Patentamt
European Patent Office
Office européen des brevets

# EUROPÄISCHER RECHERCHENBERICHT

Nummer der Anmeldung
EP 08 01 4999

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | WO 2006/036089 A (ERICSSON TELEFON AB L M [SE]; FELTER STEFAN [SE]; URABE KENZO [JP]) 6. April 2006 (2006-04-06)<br>* Abbildungen 2,5 *<br>* Seite 2, Zeilen 1-10,23-31 *<br>* Seite 3, Zeilen 14-25 *<br>* Seite 6, Zeilen 26-35 *<br>* Seite 8, Zeilen 22-35 *<br>* Seite 9, Zeilen 1-15 *<br>* Seite 14, Zeilen 2-33 *<br>* Seite 15, Zeilen 1-18 *<br>----- | 1-18 | INV.<br>H04L12/24<br>H04L12/28<br>H04L12/56 |
| A | US 2005/164664 A1 (DIFONZO DANIEL F [US] ET AL) 28. Juli 2005 (2005-07-28)<br>* Abbildungen 1-5 *<br>* Seite 1, Absatz 9 *<br>* Seite 3, Absätze 33,35 *<br>* Seite 4, Absatz 38 *<br>* Seite 5, Absätze 50,52,56 *<br>----- | 1-18 | |
| A | EP 1 311 087 A (AT & T CORP [US]) 14. Mai 2003 (2003-05-14)<br>* Abbildungen 3,4 *<br>* Seite 2, Absätze 5,6 *<br>* Seite 4, Absatz 21 *<br>* Seite 5, Absatz 33 *<br>* Seite 6, Absatz 42 *<br>----- | 1-18 | RECHERCHIERTE SACHGEBIETE (IPC)<br>H04L |

Der vorliegende Recherchenbericht wurde für alle Patentansprüche erstellt

2

| Recherchenort | Abschlußdatum der Recherche | Prüfer |
|---|---|---|
| München | 5. Januar 2009 | Mircescu, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 08 01 4999

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-01-2009

| Im Recherchenbericht angeführtes Patentdokument | Datum der Veröffentlichung | Mitglied(er) der Patentfamilie | Datum der Veröffentlichung |
|---|---|---|---|
| WO 2006036089 A | 06-04-2006 | EP 1797734 A1<br>US 2007218880 A1 | 20-06-2007<br>20-09-2007 |
| US 2005164664 A1 | 28-07-2005 | KEINE | |
| EP 1311087 A | 14-05-2003 | US 2006025150 A1<br>US 2003087645 A1 | 02-02-2006<br>08-05-2003 |

EPO FORM P0461

Für nähere Einzelheiten zu diesem Anhang : siehe Amtsblatt des Europäischen Patentamts, Nr.12/82